# EUROPEAN PATENT APPLICATION

(11) **EP 1 752 291 A1**
(43) Date of publication of application: **14.02.2007**
(21) Application number: 05425592.2
(22) Date of filing: 11.08.2005
(51) Int. Cl.: B41F 33/00, G01N 21/88

(54) **Improved method and device for the quality control of printed materials**

(71) Applicant: DeCoSystem S.r.l., 50141 Firenze (IT)
(72) Inventor: Lastrucci, Tiziano, 50100 Firenze (IT)
(74) Representative: Bardini, Marco Luigi

(57) **Abstract**

Method and device for the quality control of a printed material (M), in which an image acquisition area of the material (M) is illuminated by lighting means (22) comprising at least two lamps (22a, 22b) associated with electronic ballast means (5) which trigger the lamps with respective impulsive power signals of the same amplitude and frequency, characterised in that the ballast means (5) feed the lamps (22a, 22b) with mutually displaced impulsive signals with constant and controlled phase displacement, thereby minimising the amplitude of the overall luminous intensity oscillation delivered by said lighting means (22).

## Description

The present invention relates to the field of the devices for the quality control of printing. More specifically, it refers to an improvement capable of enhancing the quality control of printed materials.

Known devices for the quality control of printed sheet-like materials (including those intended for the production of packages or labels), as well as for prints directly on three-dimensional objects such as packaging tubes, bottles or caps, comprise a photo/video digital camera acquiring images of the controlled material and transmitting them to processing means equipped with appropriate software. The acquired image is then automatically processed and compared with a reference image, revealing possible deviations which indicate a decay in quality, and which therefore result unacceptable in relation with the product destination.

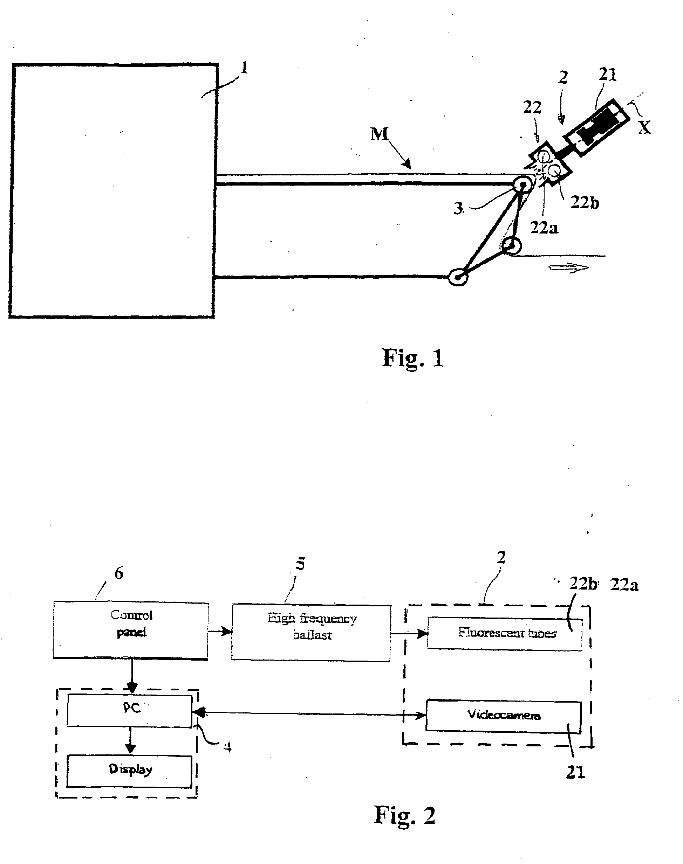

A general example related to the working conditions of such a device is illustrated in figure 1, to which reference is made hereafter. Printed material M comes out from a printing machine (generically indicated at 1), in this case in the form of a continuous web to be wound in rolls (not shown). In proximity to a deviation roller R, there is arranged the optical group 2 of a control device, not shown in its entirety including also the processing and display means with the appropriate wiring.

The optical group 2 comprises a photo-video digital camera 21 which is arranged such that the relative optical axis, indicated at X, intersects with printed material M. Lighting means 22 associated with camera 21 are arranged between the same camera and the material M, such that they irradiate the material with the luminous radiation in the field of visualisation/acquisition. In order to obtain an optimal acquisition, the use of a couple of parallel fluorescent tubes 22a, 22b results particularly advantageous; the tubes are arranged on a plane orthogonal to the optical axis X and symmetrically with respect to it.

It is clear that the way the optical group 2 is mounted and driven, as well as the features of the material M to be inspected and the way it is fed may vary depending on the circumstances. Whenever for example the lateral surface of cylindrical packages are to be inspected, these packages are supported by suitable turntables, with the optical group which works in a suitable rest station. However, the above-described general configuration of the optical group 2 remains substantially unchanged, and only this configuration is of specific interest as far as the present invention is concerned.

As mentioned above, two fluorescent lamps 22a, 22b are used, controlled through electronic means known as "ballasts", that is circuitry capable of providing the proper power supply conditions for starting and operating the above mentioned lamps. In particular, a ballast provides an impulsive power supply signal (deriving from a wave-shaped signal) at very high frequency, capable of minimizing the stroboscopic effect associated with discharge illumination systems. The two tubes are fed in parallel, that is with two respective impulsive signals of the same amplitude and mutually in phase (or out of phase in a random, uncontrolled manner).

In spite of this, and even with the very high frequencies attained by modern-day ballasts, the acquired image may present shading, stripes or even distortions, due to the not insignificant variation of the illumination intensity, in turn caused by the impulsive signal of the power supply. In this respect, it must be taken into account that the working conditions in which the quality control of the printing is carried out are particularly critical, both for the work speed (with special consideration for the frequency of camera acquisition), and for the requested degree of accuracy and the consequent sophistication of the software means utilised for processing the acquired image. Thus, even a minimal imperfection or lack of uniformity in the luminosity of the acquired image may hinder a correct conformity recognition of image.

The object of the present invention is to overcome this drawback by improving a device for the quality control of printing generically analogous to the prior art devices described above, in order to enhance the luminous uniformity of the image acquisition and therefore the efficiency of the quality control.

This object is achieved by the improved method and device for the quality control of printed materials according to the present invention, whose essential characteristics are defined respectively in the first and third of the attached claims.

Characteristics and advantages of the improved method and device for the quality control of printed materials according to the present invention will be apparent from the following description of one of its embodiments, given by way of example and not limitative, with reference to the attached drawings, in which:
- figure 1 is a schematic lay-out of a quality control device according to the invention, associated with a printing machine;
- figure 2 is a general block diagram of the hardware components of a control device according to the invention;
- figure 3 is an exemplary graph illustrating the evolution of luminous intensity emitted over time in the control device according to the invention; and
- figures 4 and 5 represent respectively a block diagram and a circuit diagram of an example of an exemplary ballast which may be utilised in the device according to the invention.

With reference to figures 1 and 2, the overall general configuration of the quality control device according to the invention is ascribable to a device of the prior art, previously and briefly discussed in the introductive part and represented as an example in association with a machine delivering a printed material M as a continuous web. The following description can however be extended to devices which, with obvious constructive modifications, are suitable for association with printed materials that are differently shaped and differently fed.

The self-explanatory diagram of figure 2 represents the entire device and therefore, in addition to the optical group 2 with the camera 21 and lighting means 22 (for example two lamps OSRAM^{®} DULUX^{®} L 36W/840), there can be noted processing means 4 for processing the acquired images (specifically, a normal PC with suitable interface drivers and processing software of known type, such as those of the device already produced and marketed under the name DECOPRINT by the present applicant).

Again in accordance with the known art, the tubes or lamps 22a, 22b are associated with high frequency electronic ballast means, represented by the block indicated at 5 and interposed between the same lamps and the related power supply, represented by an electrical control panel 6.

The ballast 5 changes the input AC power in order to supply the two lamps 22a, 22b with two impulsive input signals at high frequency (greater than 30 kHz) and of such an amplitude to satisfy the specifications of the lamps in use. According to the invention, however, the two impulsive signals with which the lamps are triggered are not mutually in phase (or in any case generated with random phase) as in the known art, but are mutually displaced in a controlled manner, advantageously at an angle equal to π/2 radians.

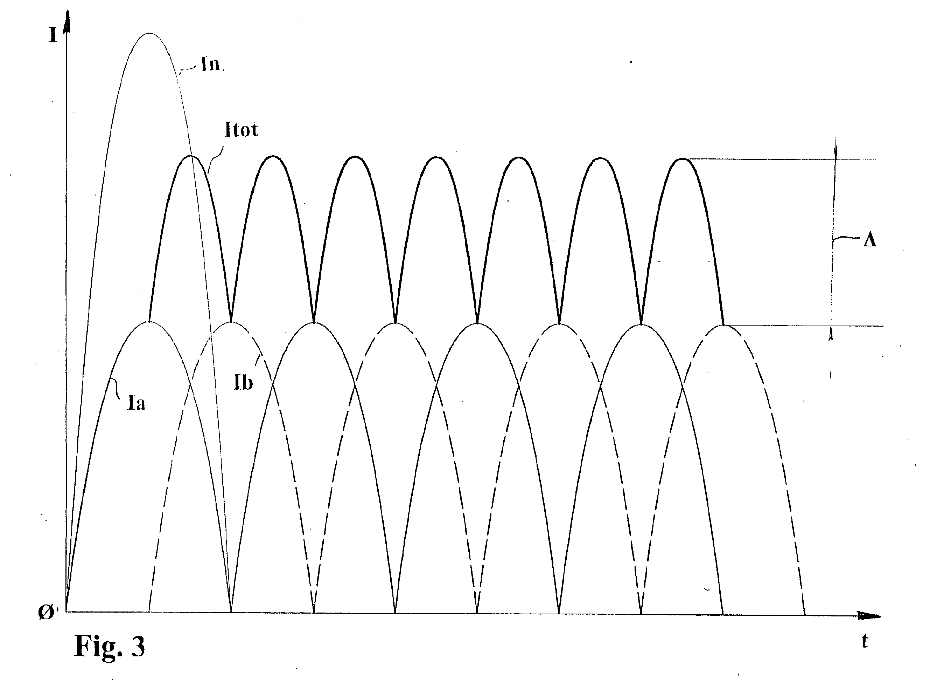

The effect of such measure can be clearly inferred from an examination of the schematic graph of figure 3. In this figure, the curve representing the evolution of the intensity - with respect to time - of the illumination Ia produced by a lamp 22a is represented by a solid line, while the curve of the luminous intensity Ib produced by the other lamp 22b is represented by a dashed line.

The two light intensity evolutions are clearly in accordance with the respective trigger signals, and therefore reproduce the phase displacement thereof. It is indeed due to this phase displacement that the total intensity resulting from the sum of Ia and Ib has an evolution, represented by a darker line and indicated at Itot, in which the difference Δ between the maximum value and minimum value is notably reduced with respect to the case in which, as in the known art, mutually in phase luminous intensities are summed together (curve represented by a thin line, indicated at In). In fact, the phase displacement is such that the low points of luminosity of one lamp are compensated by the highs of the other, and vice versa.

The considerably greater illumination uniformity thus obtained permits an enhancement of the quality of the acquired image, and consequently decreases the occurrence of errors in the process of shape-conformity recognition controlled by the processing means. Thus, the object of the invention is attained, through an extremely simple constructive measure.

Regarding this last consideration, it should be noticed how a ballast 5 capable of achieving the desired phase displacement can be constructed according to features which, as such, are obvious for the average man skilled in the electronics field, utilising components which can be found on the market. In general, therefore, the phase displacement may be attained through a number of specific circuit configurations which, when considered per se, are not to be considered within the scope of the invention.

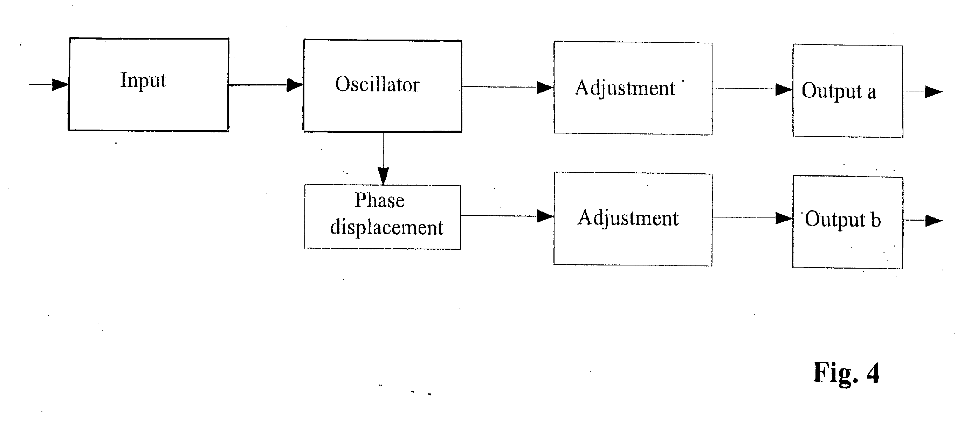

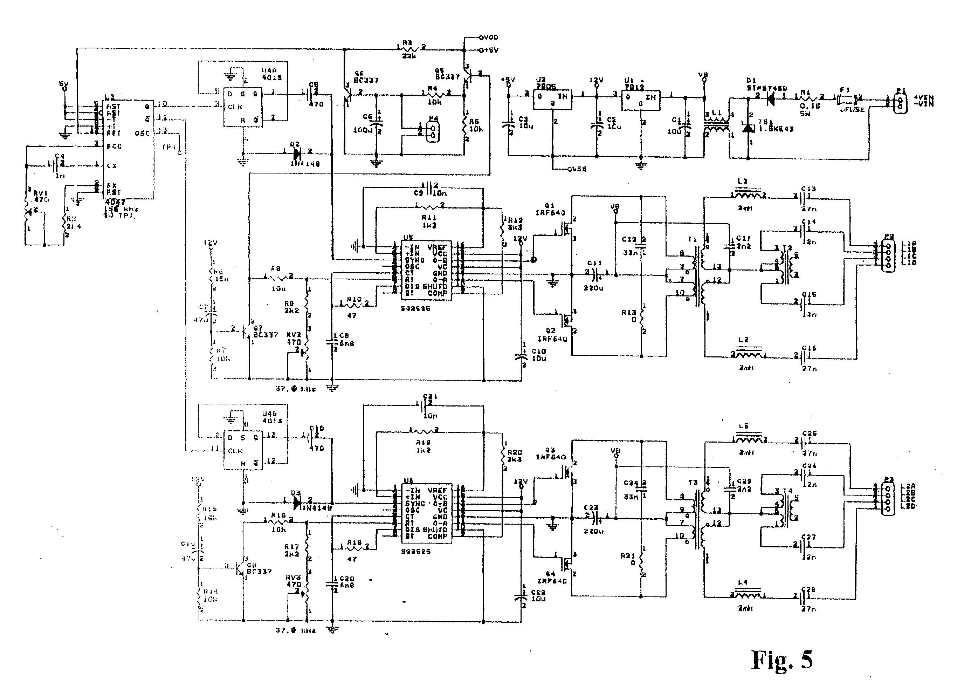

As an example, figures 4 and 5 show, through self-explanatory diagrams of clear interpretation for a man skilled in the art, a possible embodiment of a ballast capable of attaining the requested phase displacement. The diagrams, referring to an 80W-24VDC converter, show the presence of a double-output oscillator circuit which, from the input AC supply signal, produces two impulsive signals with the desired frequency characteristics on respective output branches. One of these signals, through a phase displacement circuit, is in fact displaced with respect to the other by the requested angle. The two impulsive signals, thus displaced in a controlled manner, are therefore (subject to appropriate adjustment) provided at the outputs for feeding the two lamps.

The invention may be applicable even if the lighting means comprise more than two lamps, the phase displacement between the various impulsive power signals being always established so as to ensure a reduced oscillation between the minimum and maximum of the overall luminous intensity.

Variants and/or modifications may be brought to the improved method and device for the quality control of printed materials according to the present invention without therefore departing from the protective scope of the invention itself as defined in the attached claims.

## Claims

1. Method for the quality control of a printed material (M), in which an area of image acquisition of said material (M) is illuminated by lighting means (22) comprising at least two lamps (22a, 22b) associated with electronic ballast means (5) which trigger the lamps with respective impulsive power signals of the same amplitude and frequency, **characterised in that** said ballast means (5) feed said lamps (22a, 22b) with impulsive signals which are mutually displaced with constant and controlled phase displacement, thereby minimising the amplitude of the oscillation of the overall luminous intensity delivered by said lighting means (22).

2. The method according to claim 1, wherein two lamps (22a, 22b) are arranged symmetrically with respect to an optical acquisition axis (X), the phase displacement angle between said mutually displaced impulsive signals being equal to π/2 radians.

3. A device for the quality control of printed material (M) comprising an optical group (2) with image acquisition means (21) of said material (M) and lighting means(22) of the material, comprising at least two lamps (22a, 22b) to illuminate the image acquisition area, the device comprising moreover electronic ballast means (5) associated with said lamps to trigger them with respective impulsive power signals of the same amplitude and frequency, **characterised in that** said ballast means (5) are fit to feed said lamps with mutually displaced impulsive signals with constant and controlled phase displacement, thereby minimising the amplitude of the oscillation of the overall luminous intensity delivered by said lighting means (22).

4. The device according to claim 3, wherein two lamps (22a, 22b) are arranged symmetrically to the optical axis (X) of said acquisition means (21), the phase displacement angle between said mutually displaced impulsive signals being equal to π/2 radians.

5. Device according to claim 4, wherein said ballast means comprise: a double-output oscillator circuit fit to produce, from an input AC signal and on respective output branches, two impulsive signals with the desired frequency characteristics; a phase displacement circuit arranged on one of said branches, fit to displace by the requested angle the related impulsive signal with respect to the signal on the other branch; and two adjustment circuits arranged on said branches downstream, respectively, of said oscillator circuit and said phase displacement circuit, and upstream of the respective output feed of said lamps.
